# EUROPÄISCHE PATENTSCHRIFT

(11) **EP 3 056 923 B1**
(45) Veröffentlichungstag und Bekanntmachung des Hinweises auf die Patenterteilung: **14.04.2021**
(21) Anmeldenummer: 16155689.9
(22) Anmeldetag: 15.02.2016
(51) Int. Cl.: G01S 17/02, G01S 17/42, G01S 17/86, G01S 17/89, G01S 7/00, G01S 7/48

(54) **SCANANORDNUNG UND VERFAHREN ZUM SCANNEN EINES OBJEKTES**
SCANNING ASSEMBLY AND METHOD FOR SCANNING AN OBJECT
SYSTÈME DE BALAYAGE ET PROCÉDÉ DE BALAYAGE D'UN OBJET

(30) Priorität: 13.02.2015 DE 102015102154; 13.08.2015 DE 102015113382
(43) Veröffentlichungstag der Anmeldung: 17.08.2016
(73) Patentinhaber: Zoller & Fröhlich GmbH, 88239 Wangen im Allgäu (DE)
(72) Erfinder: FRÖHLICH, Christoph, Dr., 88239 Wangen (DE); METTENLEITER, Markus, 88316 Isny (DE); HÄRTL, Franz, 88339 Bad Waldsee (DE)
(74) Vertreter: Winter, Brandl - Partnerschaft mbB

(56) Entgegenhaltungen:
- DE-A1-102013 102 554
- DE-U1-202010 013 825
- US-A1- 2003 137 449
- US-A1- 2006 188 143

## Beschreibung

Die Erfindung betrifft eine Scananordnung gemäß dem Oberbegriff des Patentanspruchs 1 und ein Verfahren zum Scannen eines Objektes.

Die 3D-Vermessung von Objekten mit Hilfe von Laserscannern gewinnt in der Praxis zunehmend an Bedeutung. Bei komplexen oder schwierig zugänglichen Objekten werden stets mehrere Laserscans nacheinander von unterschiedlichen Standpunkten aufgenommen und in einem gemeinsamen Projektordner abgespeichert, die dann in ein gemeinsames übergeordnetes Koordinatensystem überführt werden müssen. Dieser Prozess wird als "Registrierung" bezeichnet. Zur Berechnung der Transformationen der einzelnen Standpunkte in das übergeordnete Koordinatensystem ist es erforderlich, einzelne, im übergeordneten System bekannte Punkte in den jeweiligen Scans zu finden und über deren Lage eine Transformation zu errechnen, die dann auf die gesamte Punktwolke angewendet wird.

Aus der DE 20 2010 013 825 U1 ist eine Scananordnung zur 3D-Vermessung von Objekten bekannt, bei der ein Laserstrahl mittels eines Strahlablenkungssystems auf ein Objekt gerichtet wird und die von diesem reflektierten Messstrahlen über eine Recheneinheit ausgewertet werden. Die bekannte Scananordnung hat des Weiteren eine Navigationseinheit, die eine grobe Erfassung des Standorts ermöglicht.

Die Bedienung der Scananordnung kann bei dem bekannten Stand der Technik mittels eines mobilen Endgerätes, beispielsweise eines Smartphones erfolgen. Die eigentliche Auswertung der Scans erfolgt über den internen Rechner, so dass das mobile Endgerät lediglich eine Art Fernbedienung darstellt.

Die Lage der gesuchten Punkte im Scan muss des Weiteren sehr genau bekannt sein, da sich sonst die Transformation nicht korrekt berechnen lässt und die Lage der verschiedenen Laserscans, sowohl zueinander als auch zum übergeordneten Koordinatensystem, nur mit geringer Genauigkeit gegeben sind. Aus diesem Grund werden bisher - wie in der DE 10 2008 034 198 B4 der Anmelderin beschrieben - in der zu vermessenden Umgebung eine Vielzahl von Targets aufgebracht, auf denen oft eine Kennzeichnung, beispielsweise eine laufende Nummer zu Identifikation aufgedruckt ist, die bei der Auswertung manuell erfasst wird. Zur Qualitätssicherung sollten alle Targets mit einer sogenannten "Totalstation" / "Tachymeter" eingemessen (einhäusen) und notiert werden - dieser Vorgang ist mit zusätzlichem Messaufwand verbunden und bedarf zusätzlichen messtechnischen Fachwissens. Dabei muss die Positionierung so erfolgen, dass zumindest 3 Targets in jedem Scan zu sehen sind.

Zur Verringerung dieses Aufwandes kann auch eine targetlose Registrierung der dreidimensionalen Punktwolken erfolgen. Dabei erfolgt die Registrierung weitestgehend automatisch anhand der Informationen aus den Objektmesspunkten. Dabei ist es jedoch erforderlich, dass das Objekt gewisse Besonderheiten aufweist, die eine eindeutige automatische Zuordnung der einzelnen Scans ermöglichen und dass die Scans gewisse Überlappungsbereiche aufweisen. Allerdings weisen reale Umgebungen oft Mehrdeutigkeiten (z.B. Säulen in immer gleichen Abständen in einer Produktions-Halle oder immer gleiche Türen in Bürofluren) auf, die zu fehlerhaften Zuordnungen führen können. Auch kann bei oftmals mehreren Hundert aufgenommenen Laserscans aufgrund der damit verbundenen exponentiellen Rechenzeitzunahme nicht jeder mit jedem verglichen werden zum Zwecke der automatischen Registrierung. Nur auf den vorhergehenden Scan zu registrieren ist nicht immer praktikabel, etwa wenn dieser hinter einer Abschattung liegt. Aus diesen Gründen ist eine gewisse vor-Orientierung (Position und Ausrichtung) der zu registrierenden Scans meist unabdingbar, was bislang in der Regel durch ein grobes manuelles "Hinschieben" / "Ausrichten" der Scannerposition/-orientierung (Standort) im "Feldbuch" (Darstellung der Laserscanner Position, sowie des gerade aufgenommenen Scans in einer elektronischen Karte in Draufsicht) erfolgt. Dabei hat man jedoch im Feld (vor Ort) keine ausreichende Kontrolle, ob mittels dieses Verfahrens aufgenommene und grob positionierte Scans sich tatsächlich später (am Rechner im Büro) registrieren lassen. Für den Anwender ist es bisher nicht möglich, die Registrierung der Scan-Daten sofort vor Ort zu kontrollieren oder sogar die Daten weiter zu verarbeiten - es verbleibt ihm lediglich, die Scans von den vorbestimmten Standorten aus durchzuführen und dann zu hoffen, dass die Scan-Positionen bei der folgenden Auswertung im "Büro" registriert werden können.

Dabei ist der bislang übliche Workflow folgender: Zur Auswertung werden üblicherweise die Scandaten vom Laserscanner auf einen PC herunter geladen. Daraufhin erfolgt ein Öffnen jedes einzelnen Scans mittels der Registrier- und Auswerte- Software (beispielsweise Lasercontrol®) und eine Identifizierung der einzelnen Targets im Scan.

In der US 2003/0137449 A1 ist eine Scananordnung beschrieben, bei der ein Scanner mit einem Satellitenrechner verbunden ist. Der Satellitenrechner ist insbesondere dazu ausgelegt den Scanner zu programmieren.

Die US 2006/0188143 A1 offenbart ein Scansystem für dreidimensionale Objekte, wobei aus mehreren Scans jeweils Punktewolken erfasst werden. Eine Auswertung der Scans kann auf einem Satellitenrechner erfolgen, wobei die Auswertung der Scandaten nach dem Scanvorgang erfolgt.

Aus der DE 10 2013 102 554 A1 ist eine Vorrichtung zum optischen Abtasten und Vermessen einer Umgebung, die als Laserscanner ausgebildet ist, bekannt. Ferner ist eine Steuer- und Auswertevorrichtung bekannt, die für eine Vielzahl von Messpunkten zumindest eine Distanz zu einem zu vermessenden Objekt ermittelt. Der Laserscanner steht zudem in einer Funkverbindung mit einem Netzwerk.

Falls die Aufnahmen ohne Targets erstellt wurden, erfolgt ein manuelles Verknüpfen benachbarter Scans zur targetlosen Registrierung, unter Verwendung natürlicher Objekte oder Strukturen.

Wie vorstehend ausgeführt, ist als Startwert für die targetlose Registrierung die Kenntnis über die Scannerposition und Scannerorientierung erforderlich, weshalb die groben Werte aus dem Feldbuch manuell genau auf benachbarte Scans abgestimmt werden müssen.

Stellt es sich nun während dieser Auswertung heraus, dass die Scans aufgrund mangelnder Überlappungsbereiche oder sonstiger Gründe nicht registriert werden können, besteht keine sofortige Möglichkeit der Nachbesserung, da, wie gesagt, diese Auswertung nicht im Feld erfolgt.

Die Durchführung von einfachen Vermessungen des Objektes ist üblicherweise erst am PC nach der Registrierung des Scans durchführbar. Dies ist allerdings bei einigen Anwendungen nachteilig, etwa wenn die bei der Vermessung entstandenen Datensätze geheim sind und die Anlage nicht verlassen dürfen. Das heißt, sämtliche Entscheidungen, Auswertungen und Datenerfassungen müssen vor Ort erfolgen, so dass die nachträgliche Vermessung des Objektes bei der oben geschilderten Nachbearbeitung unzulässig ist.

Demgegenüber liegt der Erfindung die Aufgabe zugrunde, eine Scananordnung sowie ein Verfahren zum Scannen eines Objektes zu schaffen, mit denen ein neuer Workflow eingeführt wird, der eine vereinfachte Datenauswertung ermöglicht.

Diese Aufgabe wird durch eine Scananordnung mit den Merkmalen des Patentanspruchs 1 bzw. durch ein Verfahren zum Scannen eines Objektes mit den Merkmalen des nebengeordneten Patentanspruchs 9 gelöst.

Vorteilhafte Weiterbildungen der Erfindung sind Gegenstand der Unteransprüche.

Die erfindungsgemäße Scananordnung hat zumindest einen Laserscanner zur 2D-oder 3D-Vermessung von Objekten und einen Speicher zum Ablegen von projektbezogenen Daten (Projektfile, beispielsweise den Scandaten und der Scannerposition und der Scannerorientierung). Die Scananordnung hat des Weiteren eine Navigationseinheit zum Erfassen dieser Scannerposition und der Scannerorientierung, bzw. einer Scannerrelativposition mit Bezug zu einer Startposition. Weiterhin vorhanden ist eine als Funkverbindung ausgeführte Datenverbindung zu einem sich im Feld (vor Ort) befindlichen Handheld oder Tablet. Die Scananordnung ist mit einer geeigneten Einrichtung zum Übertragen der aufgenommenen Scans an den Handheld oder das Tablet ausgeführt, wobei dieser ausgelegt ist, in Abhängigkeit von der jeweiligen Scannerposition/-orientierung eine Registrierung des betreffenden Scans in einem übergeordneten (projektspezifischen) Koordinatensystem parallel zu einem sich anschließenden Scanvorgang durch zu führen.

Diese Scananordnung ermöglicht eine sehr komfortable Scandatenverarbeitung und Registrierung im Feld, wobei fehlerhafte oder unzureichende Messungen automatisch im Feld erkannt werden, sowie Versäumnisse des Anwenders an Ort und Stelle aufgedeckt werden, welche sonst später zu Problemen führen könnten.

Ein weiterer Vorteil der erfindungsgemäßen Anordnung besteht darin, dass die relativ zeitaufwendige Registrierung durch die Auslagerung auf den Handheld oder das Tablet erfindungsgemäß parallel zu einem sich anschließenden Scanvorgang mittels des Laserscanners erfolgen kann, so dass zum Einen die Wartezeit während des Messvorgangs an einem Standort zur Auswertung der Messung am zuvor vermessenen Standorts ausgenutzt werden kann. Das Scannen und Auswerten des Scans erfolgt somit wesentlich schneller als bei herkömmlichen Lösungen.

Der Handheld oder das Tablet kann, gemäß einem bevorzugten Ausführungsbeispiel, des Weiteren eine Einrichtung zum Generieren einer Fehlermeldung, wenn die Registrierung eines Scans fehlgeschlagen ist, aufweisen.

Der Aufbau der Scananordnung ist besonders einfach, wenn die Datenübertragung per Bluetooth-Verbindung, Mobilfunk oder nach WiFi-Standard erfolgt, kann aber auch kabelgebunden sein.

Der Handheld oder das Tablet kann derart ausgelegt sein, dass eine Registrierung der Scans mit und ohne Targets möglich ist und auch der Laserscanner ansteuerbar ist. Das heißt, über den Handheld oder das Tablet kann im Feld eine Auswertung der Scans im Sinne einer voll- oder teilautomatischen Registrierung erfolgen und gegebenenfalls der Laserscanner zur Wiederholung, zur Nacherfassung eines Teilbereichs, oder Durchführung eines Scans von einer anderen Position angesteuert werden.

Der Zeitbedarf zum Erfassen eines Objektes kann weiter minimiert werden, wenn einem gemeinsamen Handheld oder Tablet mehrere Laserscanner zugeordnet sind, so dass die Auswertung der verschiedenen Scans zentral vor Ort erfolgt.

Die Koordination der einzelnen Laserscanner kann entweder direkt über den Handheld oder das Tablet oder über einen gemeinsamen Server oder einen Projektleitungsrechner erfolgen, der in Datenverbindung mit dem oder den Handhelds oder Tablets steht und über den eine gemeinsame Auswertung und Koordination der Scanvorgänge erfolgt.

Bei einer besonders komfortablen Lösung kann die Scananordnung mit einer Schnittstelle zum Ansteuern eines automatischen Positioniersystems zum Verfahren des Laserscanners an einen zum Scannen geeigneten Standort ausgeführt sein. Dies kann beispielsweise ein Roboter sein, der den Laserscanner zur softwareseitig vorgegebenen optimalen Position verfährt.

Zur Erfassung von Farbinformationen kann die Scananordnung zusätzlich mit einer Farbkamera oder weiteren Sensoren, etwa zur Aufnahme von Thermografie Daten, ausgeführt sein. Diese können auch in den Scanner integriert sein.

Gemäß dem erfindungsgemäßen Verfahren zum Scannen eines Objektes, vorzugsweise mit einer Scananordnung der vorbeschriebenen Art, ergeben sich folgende Schritte:
Aufnehmen eines Scans mittels zumindest eines Laserscanners und Bestimmung des Standorts und der Orientierung des Laserscanners. Die aus dem Scanvorgang resultierende 3D-Punktwolke des Scans und Navigationsdaten des Scanners werden dann an den lokalen Handheld oder Tablet übertragen. Diese Übertragung erfolgt vorzugsweise per Funk, etwa Bluetooth, WiFi oder Mobilfunk. Alternativ kann auch eine kabelgebundene Kommunikation durchgeführt werden. Mittels der dort vorhandenen Software (z.B. Lasercontrol "Scout®") erfolgt das automatische Registrieren des Scans in Abhängigkeit vom Scannerstandort und der Scannerorientierung entweder in ein übergeordnetes Koordinatensystem oder relativ zu einem vorhergehenden Scan. Die automatische Registrierung ist typischer Weise in zwei Schritte aufgeteilt:
1) der Vor-Registrierung, die automatisch die grobe Position und Orientierung des aufgenommenen Scans berechnet. Diese kann alternativ auch vom Anwender durch manuelles "Verschieben/Verdrehen" des Laserscans im elektronischen Feldbuch durchgeführt werden.
2) der Fein-Registrierung, die automatisch aus den groben Informationen der Vor-Registrierung eine exakte Registrierung berechnet, entweder basierend auf der Minimierung von 3D Pixel-Abständen (ICP) oder der Zuordnung vorhandener Objekte (z.B. Flächen, Zylinder) oder Strukturen (z.B. Ecken, Kanten) in den zu registrierenden 3D-Punktwolken.

Die Software, beziehungsweise der Handheld oder das Tablet ist vorzugsweise so ausgelegt, dass in dem Fall, in dem der Scan nicht oder nur fehlerbehaftet registrierbar ist, eine Fehlermeldung abgegeben wird, so dass gegebenenfalls der Scanvorgang wiederholt wird oder diese Wiederholung von einem anderen Standort aus erfolgt. Auch kann der Anwender durch manuelle Eingriffe versuchen, das Registrierergebnis zu verbessern.

Derartige manuelle Eingriffe können beispielsweise darin bestehen, dass zunächst andere Registrier-Parameter gesetzt werden oder eine manuelle Vor-Registrierung erfolgt und dann die eigentliche Registrierung nochmals durchgeführt wird.

Alternativ kann - wie oben ausgeführt - nach einer Änderung von Scan-Parametern oder einer Änderung des Scanners-Standpunkts ein neuer Scan aufgenommen werden.

Für den Fall, dass keine Fehlermeldung abgegeben wird, werden die auf dem Laserscanner abgelegten Daten aktualisiert, in dem die auf dem Tablet berechneten Resultate übertragen werden (Upload), so dass eine Datenkonsistenz zwischen Laserscanner und Tablet gewährleistet ist.

Diese Abfolge wird wiederholt, bis eine vollständige Vermessung des Objektes vorliegt und alle Scandaten in der erforderlichen Weise registriert sind. Der Laserscanner wird demnach jeweils zu einem neuen Standort versetzt, wobei eine Auswertung des Scans auf dem Satellitenrechner und ein sich anschließender Scanvorgang parallel mittels des Laserscanners durchgeführt wird.

Der Fortschritt dieser Registrierung wird dabei stets im Feld (vor Ort) kontrolliert, so dass sofort eingegriffen werden kann, falls eine unvollständige Vermessung des Objektes vorliegt.

Wie erläutert, können mehrere Laserscanner einem Handheld oder Tablet zugeordnet werden. Prinzipiell ist es auch möglich, mehrere derartige Gruppen (Laserscanner und Handheld oder Tablet) miteinander zu vernetzen.

Bei komplexen Messaufgaben kann es vorteilhaft sein, wenn der Handheld oder das Tablet mit einem zentralen Server oder einem Projektleitungsrechner verbunden ist, über den die Vermessung des Objektes koordiniert ist.

Besonders vorteilhaft ist es, wenn der Handheld oder das Tablet, beziehungsweise dessen Software so ausgelegt ist, dass mittels des Handhelds oder Tablets einfachere Messungen nach Registrierung der Scans durchgeführt werden können. Derartige einfachere Messungen können beispielsweise die Erfassung von Abmessungen, Flächen, Volumina, Abständen und dergleichen sein.

Bei einer Variante der Erfindung hat der Laserscanner einen integrierten Rechner, auf dem beispielsweise bei Ausfall einer Funkverbindung eine Registrierung oder Auswertung durchgeführt werden kann.

Bevorzugte Ausführungsbeispiele der Erfindung werden im Folgenden anhand von schematischen Zeichnungen näher erläutert. Es zeigen:
Figur 1 den Grundaufbau einer derartigen Scananordnung;
Figur 2 eine Variante der Scananordnung gemäß Figur 1 mit mehreren Laserscannern oder ähnlichen Aufnahmegeräten und
Figur 3 ein Fließdiagramm zur Verdeutlichung eines erfindungsgemäßen Scanvorgangs.

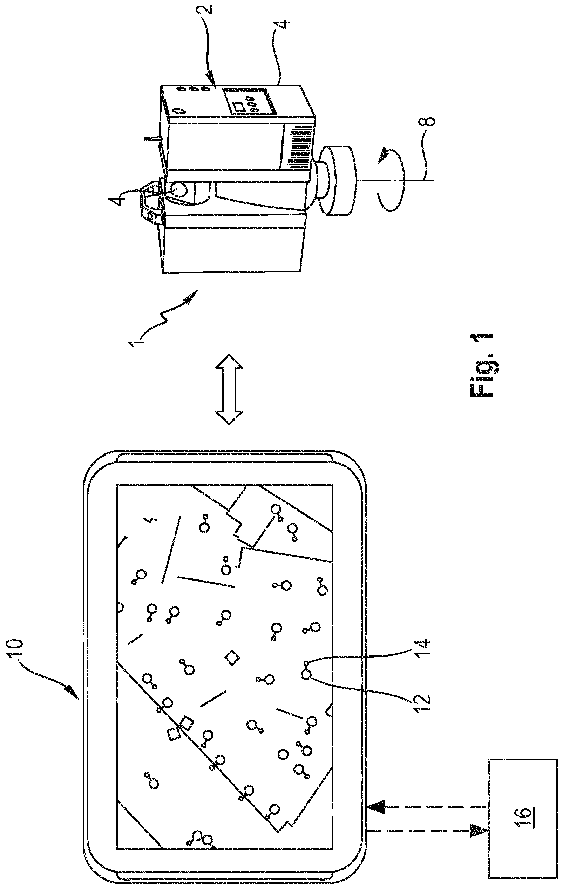

Figur 1 zeigt den Grundaufbau einer Scananordnung 1. Demgemäß hat diese zumindest einen Laserscanner 2, wie er beispielsweise von der Patentanmelderin unter dem Namen "Imager®" vertrieben wird. Dieser Laserscanner 2 hat einen rotierenden Messkopf 4, der um eine Horizontalachse (Ansicht nach Figur 1) rotiert und über den ein Laserstrahl auf ein zu vermessendes Objekt gerichtet wird. Eine Sende- und Empfangseinheit des Laserscanners 1 ist in einem Gehäuse 6 angeordnet, das um eine vertikale Schwenkachse 8 um zumindest 180° verschwenkbar ist, so dass ein zu vermessendes Objekt nahezu vollständig durch Verschwenken des Gehäuses 4 um die Schwenkachse 8 und dabei rotierenden Messkopf 2 abgetastet werden kann, wobei unterhalb des Messkopfs befindliche Bereiche des Objektes durch das Gehäuse 6 abgedeckt sind und somit nicht erfassbar sind. Hinsichtlich weiterer Einzelheiten des Aufbaus eines derartigen Scanners sei beispielsweise auf die DE 101 50 436 B4 oder die DE 10 2006 024 534 A1 verwiesen.

Im Gehäuse 2 kann des Weiteren noch ein Speicher für die Scandaten sowie eine Auswerteeinheit zu einer ersten groben Auswertung der Scandaten, beispielsweise eine Vor-Registrierung in einem elektronischen Feldbuch angeordnet sein.

Wie in Figur 1 angedeutet, steht der Laserscanner 2 in Funkverbindung mit einem sich im Feld befindlichen Handheld oder Tablet, der im vorliegenden Fall als Tablet 10 ausgeführt ist. Die Funkverbindung kann beispielsweise eine Bluetooth-Verbindung oder eine nach dem WiFi-Standard geregelte Verbindung sein. Über diese Funkverbindung können Daten, beispielsweise der Standort und die Orientierung des Laserscanners 2 beim Scannen und die 3D-Punktwolke des Scans auf den Speicher des Tablets 10 übertragen werden. Zur Ermittlung des Scannerstandorts und der Scannerorientierung kann der Laserscanner 2 mit einem integrierten Navigationssystem ausgeführt sein, das eine GNSS (z.B. GPS)-unabhängige Bestimmung der absoluten Position des Laserscanners oder zumindest einer Relativposition zu einem bekannten Ort im Feld ermöglicht. Der Aufbau eines derartigen Navigationssystems ist in der parallelen Patentanmeldung der Anmelderin offenbart, so dass im Hinblick auf weitere Details auf die Ausführungen in dieser Parallelanmeldung verwiesen wird, deren Offenbarung zu derjenigen der vorliegenden zu zählen ist.

Wie erläutert, werden die grob vorregistrierten Daten eines beispielsweise gerade aufgenommenen Scans auf das Tablet 10 übertragen (Download). Dabei wird davon ausgegangen, dass ein Mitglied der Messcrew das Tablet 10 im Feld bedient.

Über die im Tablet 10 gespeicherte Software (z.B Lasercontrol "Scout®") wird dann die grobe Registrierung des Scans im übergeordneten Koordinatensystem überprüft und gegebenenfalls bearbeitet, wobei diese Registrierung dadurch erleichtert wird, dass die Position des Laserscanners und seine Orientierung entweder relativ zu einem vorhergehenden bekannten Standort oder sogar als absolute Position bekannt ist.

Dieser relative oder absolute Standort ist damit ausreichend exakt bestimmt, um als Startwert für eine targetlose Registrierung zu dienen. Es kann jedoch auch über die tabletseitige Software entschieden werden, dass anstelle der targetlosen Registrierung eine Targetregistrierung erfolgt.

Im Feld wird dann mittels der Tabletsoftware eine Registrierung (vorzugsweise targetlos) gestartet oder aber es werden, manuell oder automatisch, alle Targets im Scan bestimmt. Einzelne oder die Gesamtheit aller Scans kann mit diesen bestimmten Targets zu einer Tachymeterdatei (welche die mit einem Tachymeter oder einer Totalstation eingemessenen Weltkoordinaten aller Target- Mittelpunkte enthält) registriert werden.

Schlägt diese Registrierung am Tablet fehl, bekommt der Anwender unmittelbar eine Fehlermeldung und kann den Laserscan entweder am gleichen Standort oder an einem weiteren, besser geeigneten Standort wiederholen. Die Ansteuerung des Laserscanners kann dabei über das Tablet erfolgen.

Optional ist es vorgesehen, dass die Tabletsoftware so ausgelegt ist, dass ein optimaler Standort softwareseitig vorgeschlagen wird, der automatisch aus den aufgenommenen Punktwolken und Positionen / Orientierungen errechnet wird
Nach vollständiger Registrierung des Scans erfolgt dann das Verbringen des Laserscanners 2 an den nächsten Aufnahme-Standort - der Vorgang wiederholt sich, bis eine vollständige Vermessung des Objekts vorliegt, wobei alle Scans entweder relativ zueinander oder im übergeordneten Koordinatensystem registriert sind. Das heißt, die komplette Registrierung erfolgt bereits im Feld und nicht - wie bei herkömmlichen Lösungen - nach dem Auslesen aller Laserscans und der Auswertung auf einem Bürocomputer.

Ein weiterer Vorteil besteht darin, dass vor Ort softwareseitig einfache Messungen durchgeführt werden können und aus diesen Messungen auch Rückschlüsse auf die weiteren Scanvorgänge gezogen werden können.

Für den Fall, dass der Laserscanner 2 mit einer Farbkamera ausgeführt ist, kann bei genügender Reserve an Rechenkapazität auf dem Handheld sogar ein (HDR-) Farbmapping im Hintergrund durchgeführt werden, was wiederum Auswertezeit im Büro spart.

Nach der vollständigen Vermessung ist im Tablet 10 ein Feldbuch mit den jeweiligen optimalen Scannerpositionen und Scannerorientierungen 14 abgelegt. Dieses Feldbuch so wie die damit verbundenen Scandaten können dann wieder per WLAN-Verbindung oder dergleichen an einen zentralen Server 16 oder den Rechner eines Projektleiters übertragen werden, so dass eine zentrale Kontrolle seitens der Projektleitung erfolgen kann und gegebenenfalls an die sich noch im Messfeld befindliche Crew Anweisung zur Wiederholung oder zusätzlichen Durchführung von Scans gegeben werden kann. Diese Anweisungen werden dann ebenfalls per WLAN, Mobilfunk oder dergleichen an das Tablet 10 übertragen.

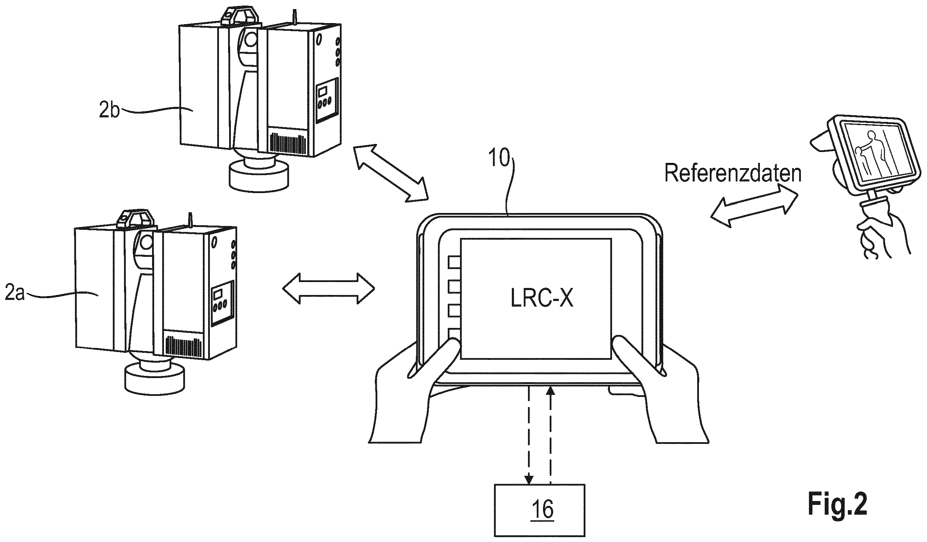

Figur 2 zeigt eine Variante, bei der das Tablet 10 über eine Funkverbindung mit mehreren, sich gleichzeitig im Feld befindlichen, Laserscannern 2a, 2b verbunden ist. Wie in Figur 2 rechts angedeutet, kann das Tablet 10 auch mit einem Referenzmessgerät 18 verbunden sein, über das Referenzdaten an das Tablet 10 übertragen werden, die dann bei der Registrierung und Auswertung der Scans mit eingehen.

Bei sehr großen Objekten kann es auch möglich sein, mehrere der in Figur 2 dargestellten Einheiten mit jeweils einem Tablet 10 und mehreren zugeordneten Laserscannern 2a, 2b im Feld zu haben, wobei dann die Tablets 10 der einzelnen Gruppen so miteinander vernetzt sind, dass der Datenbestand jeweils aktualisiert ist. Gerade bei derart komplexen Systemen ist der Datenaustausch mit dem zentralen Server 16 oder einem Projektleitungsrechner zur Koordinierung der Aktivitäten der Messcrews wichtig.

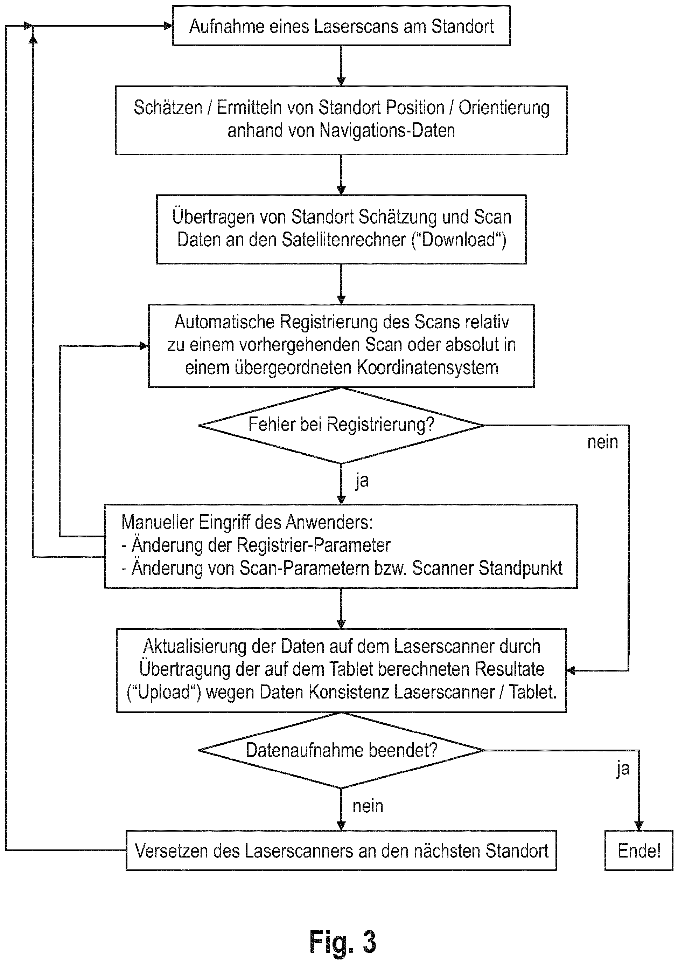

In Figur 3 sind grundlegende Schritte der Funktionsweise der erfindungsgemäßen Scananordnung und des erfindungsgemäßen Verfahrens zum Scannen eines Objektes schematisch dargestellt. Wie erläutert, erfolgt zunächst eine Standortbestimmung des oder der Laserscanner 2 im Feld. Diese Standortbestimmung kann relativ mit Bezug zu einem bekannten vorhergehenden Standort oder auch absolut erfolgen. An diesem Standort erfolgt auch die Aufnahme eines Scans, die Abspeicherung der gescannten Daten im Speicher des Laserscanners 2 und eventuell eine Vor-Registrierung bereits auf einem im Laserscanner 2 integrierten Rechner.

Der gespeicherte Standort sowie die 3D-Punktwolke des Scans wird dann per Funk im Feld an das Tablet 10 (Handheld) übertragen ("Download"), dort erfolgt zunächst eine Vor-Registrierung (falls diese nicht auf dem Laserscanner bereits erfolgt ist), sowie anschließend eine Fein-Registrierung.

Für den Fall, dass eine Registrierung aufgrund fehlerhafter Messdaten oder dergleichen nicht möglich ist, wird softwareseitig eine Fehlermeldung ausgegeben. Der Anwender kann dann versuchen, durch manuellen Eingriff (wie etwa eine manuelle Vor-Registrierung oder eine Veränderung der Registrierungs-Einstellungen) eine bessere Registrierung zu erzielen.

Alternativ nimmt der Anwender erneut einen Laserscan auf, etwa mit besseren Scan-Einstellungen oder von einem geeigneteren Standpunkt aus.

Da der alte Standort bekannt war, kann über das Navigationssystem die Relativposition des neuen Standorts zum bekannten Standort oder auch die absolute Position bestimmt werden.

Falls der Scan ohne Fehlermeldung registriert wird, wird der Laserscanner zum nächsten Standpunkt versetzt und der Scanvorgang erfolgt in der vorbestimmten Weise von neuem.

Wie in Figur 3 dargestellt, werden die Ergebnisse der auf dem Tablet 10 erfolgten Registrierung, wie etwa die (durch die Registrierung bestimmte) exakte Position und Orientierung des aktuellen Standpunktes, eventuell gefundene Target-Mittelpunkte oder andere Informationen, zum Laserscanner zurück übertragen ("Upload"), so dass immer alle Daten auf Laserscanner und Tablet konsistent bleiben.

Dies wird wiederholt, bis das gesamte Objekt vermessen ist - der Fortschritt dieser Vermessung und die Registrierung der einzelnen Scans im Feldbuch wird am Tablet 10 stets kontrolliert, so dass rechtzeitig eingegriffen werden kann, wenn die Vermessung unzureichend ist.

Zusätzlich können über die Projektleitung Anweisungen an die Crew im Messfeld gegeben werden, falls mehrere Crews mit unterschiedlichen Scannern und Tablets 10 im Feld arbeiten.

Wie in der parallelen Anmeldung erläutert, besteht das Navigationssystem im Wesentlichen aus einer Kombination von Magnetometer, Barometer, Gyroskop, Accelerometer sowie einem GNSS-Empfänger. Bei fehlendem GNSS-Empfang kann mit einem derartigen System eine Positionsänderung des Laserscanners 2 von einem Standort zum nächsten Standort relativ mitgekoppelt werden, so dass hinreichend genaue Positions- / Orientierungs- Schätzungen des neuen Standortes vorliegen. Es sind jedoch auch andere Methoden der Navigation, beispielsweise über die Standorte bekannter WLAN Punkte (RSS- oder Laufzeit- Auswertung) oder GSM Daten (Peilung zu Basis-Stationen von Mobil-Telefonen) denkbar. Diese Navigationsdaten sind, wie erläutert, im internen Speicher des Lasercanners 2 abgelegt.

Weiterhin ist es vorteilhaft, wenn die Datenverbindung zwischen dem Laserscanner 2 und dem Tablet 10 sehr schnell ist. Als besonders geeignet hat sich eine sehr schnelle WiFi-Verbindung vom Laserscanner 2 zum Tablet 10 durch zwei Antennen und Ausnützung verfügbarer g-/a- und n-Funkstandards für den schnellen Download des Scans vom Laserscanner 2 zum Tablet 10 des Anwenders herausgestellt.

Die tabletseitige Software bietet vorzugsweise eine vollständige "Touch"-Bedienung und enthält alle erforderlichen Messtools, um die vorstehend erwähnten, einfacheren Messungen durchführen zu können. Des Weiteren sind softwareseitig die automatischen Abläufe der Registrierung mit und ohne Targets abgelegt, so dass dem Anwender automatisch Ergebnisse bzw. Fehler angezeigt werden können und dieser ggf. den Scan wiederholen oder zum nächsten Scan übergehen kann.

Bei der zuvor beschriebenen Verbindung mit der Projektleitung bzw. einem zentralen Server kann eine übergeordnete Instanz, beispielsweise der Projektleiter im Vermessungsbüro, den aktuellen Stand aller Laserscanner im Feld erfassen. Je nach Anforderung kann er dann Planungsdaten in die elektronischen "Feldbücher" der eingesetzten Laserscanner schicken, auf denen zum Beispiel die von der Feldcrew zu scannenden Bereiche markiert sind. Die gewonnenen Daten können, wie erläutert, online an die Zentrale oder aber auch in eine "Cloud" übertragen werden. Die Feldcrew kann mit dem Handheld oder dem Tablet auch zusätzlich Bilder aufnehmen und Dokumente erstellen, die den Projektdaten zugeordnet und mit der Projektleitung ausgetauscht werden können.

Offenbart sind eine Scananordnung und ein Verfahren zum Scannen eines Objekts, wobei einem Laserscanner ein sich im Feld befindlicher Handheld oder Tablet zugeordnet ist, über den die Registrierung und/oder Auswertung der Scans im Feld erfolgt.

### Bezugszeichenliste:

- 1: Scananordnung
- 2: Laserscanner
- 4: Messkopf
- 6: Gehäuse
- 8: Schwenkachse
- 10: Tablet mit Registrier- / Auswerte- Software
- 12: Scannerposition
- 14: Scannerorientierung
- 16: Server
- 18: Referenzmessgerät

## Patentansprüche

1. Scananordnung mit zumindest einem Laserscanner (2) zur 2D- oder 3D-Vermessung von in einem Feld befindlichen Objekten, mit einem Speicher zum Ablegen von projektbezogenen Daten und einem integrierten Rechner und mit einer Navigationseinheit zum Erfassen einer Scannerposition (12) und/oder einer Scannerrelativposition zu einer Startposition, einer als Funkverbindung ausgeführten Datenfernverbindung zu einem sich im Feld befindlichen Satellitenrechner der Scananordnung, der als Handheld, insbesondere Tablet (10) ausgebildet ist und mit einer Einrichtung zum Übertragen von aufgenommenen Scans von dem Laserscanner (2) an den Satellitenrechner, **dadurch gekennzeichnet, dass** dieser ausgelegt ist, in Abhängigkeit von der jeweiligen Scannerposition (12) eine Registrierung des betreffenden Scans im Feld in einem projektspezifischen Koordinatensystem parallel zu einem sich anschließenden Scanvorgang mittels des Laserscanners (2) durchzuführen.

2. Scananordnung nach Patentanspruch 1, wobei der Satellitenrechner eine Einrichtung zum Generieren einer Fehlermeldung in dem Fall hat, wenn die Registrierung eines Scans fehlschlägt.

3. Scananordnung nach Patentanspruch 1 oder 2, wobei die Datenübertragung per Bluetooth-Verbindung oder nach WiFi-Standard oder Mobilfunk erfolgt.

4. Scananordnung nach Patentanspruch 1, 2 oder 3, wobei eine Software des Satellitenrechners derart ausgelegt ist, dass eine voll- oder teil- automatische Registrierung des Scans mit und ohne Targets ermöglicht ist und auch der Laserscanner (2) ansteuerbar ist.

5. Scananordnung nach einem der vorhergehenden Patentansprüche, wobei einem Satellitenrechner mehrere Laserscanner (2) zugeordnet sind.

6. Scananordnung nach einem der vorhergehenden Patentansprüche, mit einem gemeinsamen Server (16) oder einem Projektleitungsrechner, der mit dem Satellitenrechner verbunden ist und über den eine gemeinsame Auswertung und Koordination der Scanvorgänge erfolgt.

7. Scananordnung nach einem der vorhergehenden Patentansprüche, mit einer Schnittstelle zum Ansteuern eines automatischen Positioniersystems zum Verfahren des Laserscanners (2) an einem zum Scannen geeigneten Standort (12).

8. Scananordnung nach einem der vorhergehenden Patentansprüche, mit einer Farbkamera zum Erfassen von Farbinformationen.

9. Verfahren zum Scannen eines in einem Feld befindlichen Objekts, vorzugsweise mittels einer Scananordnung nach einem der vorhergehenden Patentansprüche, mit den Schritten (Fig.3):
a) Aufnehmen eines Scans mit zumindest einem Laserscanner (2);
b) Bestimmen des Standorts und der Orientierung des Laserscanners (2);
c) Übertragen der Scan- und Navigations-Daten an einen lokalen als Handheld, insbesondere Tablet (10) ausgeführten zur Scananordnung gehörenden Satellitenrechner, Download;
d) Registrieren des Scans in Abhängigkeit vom Scannerstandort (12) und der Scannerorientierung (14) in einem übergeordneten Koordinatensystem oder relativ zu einem zuvor aufgenommenen Scan oder Registrieren des Scans in Abhängigkeit von manuell oder automatisch im Scan identifizierten Targets in einem übergeordneten Koordinatensystem oder relativ zu einem zuvor aufgenommenen Scan mittels des Satellitenrechners;
**gekennzeichnet durch**
e) Versetzen des Laserscanners (2) an einen neuen Standort (12) und Wiederholen der Schritte a) bis d), wobei eine Auswertung des Scans auf dem Satellitenrechner und ein sich anschließender Scanvorgang parallel mittels des Laserscanners (2) durchgeführt wird, wobei
f) anhand des Satellitenrechners erfassbar ist, dass eine vollständige Vermessung des Objekts vorliegt.

10. Verfahren nach Patentanspruch 9, mit den Schritten:
Ausgabe einer Fehlermeldung, falls der Scan nicht oder nur fehlerhaft registrierbar ist und/oder
manueller Eingriff des Anwenders durch
- Setzen anderer Registrier-Parameter oder manuelle Vor-Registrierung oder
- erneuter Scan mit anderen Scan-Parametern oder von anderem Standpunkt.

11. Verfahren nach Patentanspruch 9 oder 10, wobei eine Aktualisierung der Daten auf dem Laserscanner (2) durch Rück-Übertragung, Upload, der bei der Registrierung / Auswertung auf einem Tablet (10) gewonnenen Ergebnisse erfolgt.

12. Verfahren nach einem der Patentansprüche 9 bis 11, wobei die Daten mehrerer Laserscanner mittels des Satellitenrechners verarbeitbar sind.

13. Verfahren nach einem der Patentansprüche 9, 10, 11 oder 12, wobei der oder die Satellitenrechner mit einem zentralen Server (16) oder einem Projektleitungsrechner verbunden sind.

14. Verfahren nach einem der Patentansprüche 10 bis 13, wobei die Registrierung und/oder Auswertung der aufgenommenen Daten auch auf einem im Laserscanner (2) integrierten Rechner erfolgt.

## Claims

1. A scanning arrangement comprising at least one laser scanner (2) for 2D or 3D measurement of objects located in a field, comprising a memory for storing project-related data and an integrated computer as well as comprising a navigation unit for detecting a scanner position (12) and/or
a scanner position relative to a starting position, a remote data communication in the form of radio communication with a satellite computer of the scanning arrangement located in the field which is configured as a handheld, especially a tablet (10), and comprising
a device for transmitting recorded scans from the laser scanner (2) to the satellite computer, **characterized in that** said satellite computer is configured to carry out, in response to the respective scanner position (12), a registration of the respective scan in the field in a project-specific coordinate system in parallel to a subsequent scanning operation by means of the laser scanner (2).

2. The scanning arrangement according to claim 1, wherein the satellite computer includes a device for generating a fault message in the event that the registration of a scan fails.

3. The scanning arrangement according to claim 1 or 2, wherein the data are transmitted via Bluetooth connection or according to WIFI standard or mobile radio communication.

4. The scanning arrangement according to claim 1, 2 or 3, wherein a software of the satellite computer is configured so that a fully or semi-automatic registration of the scan with or without targets is enabled and also the laser scanner (2) can be driven.

5. The scanning arrangement according to any one of the preceding claims, wherein plural laser scanners (2) are assigned to one satellite computer.

6. The scanning arrangement according to any one of the preceding claims, comprising a joint server (16) or a project management computer that is connected with the satellite computer and via which the scanning operations are jointly evaluated and coordinated.

7. The scanning arrangement according to any one of the preceding claims, comprising an interface for driving an automatic positioning system for moving the laser scanner (2) at a location (12) suitable for scanning.

8. The scanning arrangement according to any one of the preceding claims, comprising a color camera for detecting color information.

9. A method for scanning an object located in a field, preferably by means of a scanning arrangement according to any one of the preceding claims, comprising the steps of (Fig. 3):
a) recording a scan by at least one laser scanner (2);
b) determining the location and the orientation of the laser scanner (2);
c) transmitting the scanning and navigation data to a local satellite computer in the form of a handheld, especially a tablet (10) and being part of the scanning arrangement, download;
d) registering the scan in response to the scanner location (12) and the scanner orientation (14) in a higher-level coordinate system or relative to a previously recorded scan, or registering the scan in response to targets identified manually or automatically in the scan in a higher-level coordinate system or relative to a previously recorded scan by means of the satellite computer;
**characterized by**
e) shifting the laser scanner (2) to a new location (12) and repeating the steps a) through d), wherein an evaluation of the scan is carried out on the satellite computer and a subsequent scanning operation is carried out in parallel by means of the laser scanner (2), wherein
f) it can be detected by way of the satellite computer that a complete measurement of the object is given.

10. The method according to claim 9, comprising the steps of:
output of a fault message if the scan cannot be registered or can be registered only incorrectly, and/or
manual intervention by the user by
- setting different registering parameters or manual pre-registering, or
- repeated scanning with different scanning parameters or from a different position.

11. The method according to claim 9 or 10, wherein the data in the laser scanner (2) are updated by re-transmission, upload, of the results obtained during registration/evaluation on a tablet (10).

12. The method according to any one of the claims 9 to 11, wherein the data of plural laser scanners can be processed by means of the satellite computer.

13. The method according to any one of the claims 9, 10, 11 or 12, wherein the satellite computer or computers is/are connected to a central server (16) or a project management computer.

14. The method according to any one of the claims 10 to 13, wherein the recorded data are registered and/or evaluated also on a computer integrated in the laser scanner (2).

## Revendications

1. Agencement de balayage avec au moins un dispositif de balayage laser (2) pour une mesure 2D ou 3D d'objets se trouvant dans un champ, avec une mémoire pour stocker des données relatives à un projet et un ordinateur intégré, et avec une unité de navigation pour une détection d'une position de dispositif de balayage (12) et/ou d'une position relative de dispositif de balayage par rapport à une position de départ, une connexion de données à distance qui est réalisée sous la forme d'une connexion radio avec un ordinateur satellite du dispositif de balayage se trouvant dans un champ, qui est réalisée sous une forme portative, en particulier une tablette (10), et avec un appareil pour une transmission de balayages reçus du dispositif de balayage laser (2) à l'ordinateur satellite, **caractérisé en ce que** celui-ci est conçu pour effectuer un enregistrement du balayage correspondant dans un champ dans un système de coordonnées spécifique à un projet parallèlement à un processus de balayage ultérieur au moyen du dispositif de balayage laser (2) en fonction de la position de dispositif de balayage respective (12).

2. Agencement de balayage selon la revendication 1, dans lequel l'ordinateur satellite présente un appareil pour générer un message d'erreur dans un cas où l'enregistrement d'un balayage échoue.

3. Agencement de balayage selon la revendication 1 ou 2, dans lequel la transmission de données a lieu par l'intermédiaire d'une connexion Bluetooth ou selon une norme WiFi ou par téléphonie mobile.

4. Agencement de balayage selon la revendication 1, 2 ou 3, dans lequel un logiciel de l'ordinateur satellite est conçu de telle sorte qu'un enregistrement totalement ou partiellement automatique du balayage avec et sans cible est rendu possible et que le dispositif de balayage laser (2) peut lui aussi être commandé.

5. Agencement de balayage selon l'une quelconque des revendications précédentes, dans lequel plusieurs dispositifs de balayage laser (2) sont associés à un ordinateur satellite.

6. Agencement de balayage selon l'une quelconque des revendications précédentes, avec un serveur commun (16) ou un ordinateur de gestion de projet qui est connecté à l'ordinateur satellite et par l'intermédiaire duquel une évaluation et une coordination communes des processus de balayage ont lieu.

7. Agencement de balayage selon l'une quelconque des revendications précédentes, avec une interface pour commander un système de positionnement automatique afin de déplacer le dispositif de balayage laser (2) en un emplacement (12) approprié à un balayage.

8. Agencement de balayage selon l'une quelconque des revendications précédentes, avec une caméra couleur pour une détection d'informations de couleur.

9. Procédé de balayage d'un objet se trouvant dans un champ, de préférence au moyen d'un agencement de balayage selon l'une quelconque des revendications précédentes, avec les étapes consistant à (figure 3) :
a) recevoir un balayage avec au moins un dispositif de balayage laser (2) ;
b) déterminer l'emplacement et l'orientation du dispositif de balayage laser (2) ;
c) transmettre les données de balayage et de navigation à un ordinateur satellite local se présentant sous une forme portative, en particulier une tablette (10), appartenant à l'agencement de balayage, télécharger ;
d) enregistrer le balayage en fonction de l'emplacement de dispositif de balayage (12) et de l'orientation de dispositif de balayage (14) dans un système de coordonnées à un niveau supérieur ou par rapport à un balayage reçu précédemment ou enregistrer le balayage en fonction de cibles identifiées manuellement ou automatiquement dans le balayage dans un système de coordonnées à un niveau supérieur ou par rapport à un balayage reçu précédemment au moyen de l'ordinateur satellite ;
**caractérisé par** les étapes consistant à
e) déplacer le dispositif de balayage laser (2) vers un nouvel emplacement (12) et répéter les étapes a) à d), dans lequel une évaluation du balayage sur l'ordinateur satellite et un processus de balayage ultérieur sont effectués en parallèle au moyen du dispositif de balayage laser (2), dans lequel
f) il est possible de détecter, sur la base de l'ordinateur satellite qu'une mesure complète de l'objet est disponible.

10. Procédé selon la revendication 9, avec les étapes consistant à :
délivrer en sortie un message d'erreur si le balayage ne peut pas être enregistré ou ne peut être enregistré que de manière incorrecte
et/ou
faire intervenir manuellement l'utilisateur par les étapes consistant à
- régler d'autres paramètres d'enregistrement ou un préenregistrement manuel ou
- balayer à nouveau avec d'autres paramètres de balayage ou d'un point de vue différent.

11. Procédé selon la revendication 9 ou 10, dans lequel une mise à jour des données sur le dispositif de balayage laser (2) a lieu par retransmission, téléchargement, des résultats obtenus lors de l'enregistrement/évaluation sur une tablette (10).

12. Procédé selon l'une quelconque des revendications 9 à 11, dans lequel les données de plusieurs dispositifs de balayages laser peuvent être traitées au moyen de l'ordinateur satellite.

13. Procédé selon l'une quelconque des revendications 9, 10, 11 ou 12, dans lequel le ou les ordinateurs satellites sont connectés à un serveur central (16) ou à un ordinateur de gestion de projet.

14. Procédé selon l'une quelconque des revendications 10 à 13, dans lequel l'enregistrement et/ou l'évaluation des données reçues a lieu sur un ordinateur intégré dans le dispositif de balayage laser (2).
